# EUROPÄISCHE PATENTANMELDUNG

(11) **EP 3 318 122 A1**
(43) Veröffentlichungstag der Anmeldung: **09.05.2018**
(21) Anmeldenummer: 16002357.8
(22) Anmeldetag: 07.11.2016
(51) Int. Cl.: A01K 1/00

(54) **BETÄTIGUNGSVORRICHTUNG FÜR ZULUFTELEMENTE**

(71) Anmelder: Fienhage, Hans-Jürgen, 49424 Lutten (DE)
(72) Erfinder: Rensing, Frank, 49429 Visbek (DE)
(74) Vertreter: Heiland, Karsten

(57) **Zusammenfassung**

Die Erfindung betrifft eine Betätigungsvorrichtung für zwei oder mehr Zuluftelemente (10, 11). Vorgesehen sind ein Stellmittel zur Betätigung einer Verzögerungseinheit (21), ein erstes Verbindungsmittel von der Verzögerungseinheit zu wenigstens einem ersten Zuluftelement, ein zweites Verbindungsmittel von der Verzögerungseinheit zu wenigstens einem zweiten Zuluftelement, wobei die Verzögerungseinheit die Bewegung des Stellmittels auf die beiden Verbindungsmittel überträgt und dabei eines der beiden Verbindungsmittel im Verhältnis zum anderen Verbindungsmittel verzögert.

## Beschreibung

Die Erfindung betrifft eine Betätigungsvorrichtung für zwei oder mehr Zuluftelemente. Daneben betrifft die Erfindung einen Tierstall, insbesondere Geflügelstall, mit Zuluftelementen und Betätigungsvorrichtung.

In Geflügelställen bzw. Hühnerställen für die Massentierhaltung muss eine ausreichende Belüftung gewährleistet sein. Hierzu weisen Stallwände Zuluftelemente, insbesondere Belüftungsklappen auf. Enfinreder werden die Zuluftelemente gemeinsam geöffnet und geschlossen oder es müssen Steuerungen und Antriebe für die individuelle Betätigung der Zuluftelemente vorgesehen sein. Letzteres ist aufwendig und fehleranfällig, ermöglicht aber eine genauere Dosierung der für die Belüftung erforderlichen Zuluft.

Aufgabe der vorliegenden Erfindung ist die Schaffung einer Betätigungsvorrichtung, mit der mehrere Zuluftelemente nacheinander zu öffnen und/oder zu schließen sind.

Erfindungsgemäß wird die Aufgabe durch eine Betätigungsvorrichtung für zwei oder mehr Zuluftelemente und mit den Merkmalen des Anspruchs 1 gelöst. Insbesondere sind ein Stellmittel zur Betätigung einer Verzögerungseinheit, ein erstes Verbindungsmittel von der Verzögerungseinheit zu wenigstens einem ersten Zuluftelemente und ein zweites Verbindungsmittel von der Verzögerungseinheit zu wenigstens einem zweiten Zuluftelemente vorgesehen, wobei die Verzögerungseinheit die Bewegung des Stellmittels auf die beiden Verbindungsmittel überträgt und dabei eines der beiden Verbindungsmittel im Verhältnis zum anderen Verbindungsmittel verzögert.

Grundsätzlich wirkt das Stellmittel mittelbar auf beide Zuluftelemente ein. Die zwischen Stellmittel und Verbindungsmittel geschaltete Verzögerungseinheit bewirkt eine Verzögerung des einen Verbindungsmittels im Verhältnis zum anderen Verbindungsmittel. Dadurch wird mit dem gemeinsamen Stellmittel zunächst nur ein Zuluftelement und dann das andere Zuluftelement betätigt. Auf diese Weise ist es möglich durch Betätigung des Stellmittels entweder beide Zuluftelemente geschlossen zu halten, nur ein Zuluftelement zu öffnen oder aber beide Zuluftelemente zu öffnen. Natürlich sind auch dazwischenliegende Teilstellungen der Zuluftelemente möglich, etwa ein halb geöffnetes erstes Zuluftelement oder ein vollständig geöffnetes erstes Zuluftelement und ein nur halb geöffnetes zweites Zuluftelement usw.

Verbindungsmittel und Verzögerungseinheit wirken grundsätzlich mechanisch, ebenso das Stellmittel. Elektrische oder elektronische Steuerungen für die sukzessive Ansteuerung der Zuluftelemente sind nicht erforderlich.

Verbindungsmittel und Zuluftelemente können auch gruppenweise vorgesehen bzw. zugeordnet sein, so dass ein erstes Verbindungsmittel mit einer ersten Gruppe von Zuluftelementen verbunden ist und ein zweites Verbindungsmittel mit einer zweiten Gruppe von Zuluftelementen.

Nach einem weiteren Gedanken der Erfindung ist vorgesehen, dass die Verzögerungseinheit einen Schlitten aufweist, welcher einen (zum Schlitten quer gerichteten) zweiarmigen Hebel trägt, dass neben einer Führung für den Schlitten ein Anschlag für einen ersten Hebelarm des Hebels vorgesehen ist, dass eines der beiden Verbindungsmittel mit dem Schlitten gekoppelt ist, dass das andere Verbindungsmittel mit einem zweiten Hebelarm des Hebels gekoppelt ist, und dass der Schlitten durch das Stellmittel betätigbar ist. Schlitten und Hebelarm wirken als Übersetzung für die Bewegung der Verbindungsmittel. Das Stellmittel betätigt über den Schlitten beispielsweise das erste Verbindungsmittel und damit auch das erste Zuluftelement direkt und unmittelbar. Sobald der erste Hebelarm des Hebels am Anschlag anliegt, ist die Bewegung des zweiten Hebelarms festgelegt, auch in Abhängigkeit vom Längenverhältnis der beiden Hebelarme. Jedenfalls führt der zweite Hebelarm bei Weiterbewegung des Schlittens eine deutlich schnellere Bewegung aus als der Schlitten selbst. Entsprechend betätigt das zweite Verbindungsmittel das zweite Zuluftelement deutlich schneller.

Durch die Betätigung der erfindungsgemäßen Betätigungsvorrichtung kann ein Zuluftelement bzw. eine Gruppe von Zuluftelementen zunächst ganz oder teilweise geöffnet oder geschlossen werden. Am Ende der Betätigung folgt dann das zweite Zuluftelement bzw. die zweite Gruppe von Zuluftelementen mit erhöhter Geschwindigkeit. Durch Abstimmung der Verbindungsmittel und der Geometrie innerhalb der Verzögerungseinheit kann die Betätigungsvorrichtung sogar so eingestellt werden, dass die unterschiedlichen Zuluftelemente bzw. Gruppen von Zuluftelementen zwar nacheinander mit dem Öffnen oder Schließen beginnen, die Öffnungs- oder Schließvorgänge aber gemeinsamen enden.

Vorteilhafterweise erstrecken sich die beiden Hebelarme entlang einer gemeinsamen Geraden, mit einem Drehpunkt am Schlitten, und/oder sind etwa gleichlang ausgebildet. Gleichlange Hebelarme ermöglichen eine Verdopplung der Geschwindigkeit des einen Verbindungsmittels im Verhältnis zum anderen Verbindungsmittel. Die Anordnung auf derselben Gerade ermöglicht eine besonders einfache Konstruktion.

Nach einem weiteren Gedanken der Erfindung ist vorgesehen, dass bei einer Betätigungsbewegung des Stellmittels zunächst der erste Hebelarm am Anschlag zur Anlage kommt und dass dadurch bei weiterer Betätigungsbewegung des Stellmittels das mit dem zweiten Hebelarm gekoppelte Verbindungsmittel schneller bewegt wird als das mit dem Schlitten gekoppelte Verbindungsmittel. Entsprechend ergibt sich am Ende der Betätigungsbewegung eine im Verhältnis zum Schlitten schnellere Bewegung des mit dem zweiten Hebelarm gekoppelten Verbindungsmittels. Ist die Betätigung zum Öffnen vorgesehen, kann auf diese Weise das Öffnen des zweiten Zuluftelements zeitlich nach dem Öffnen des ersten Zuluftelements aber schneller ausgeführt werden. Analog gilt dies für eine zum Schließen vorgesehene Betätigung.

Nach einem weiteren Gedanken der Erfindung sind als Verbindungsmittel Zugmittel vorgesehen, insbesondere Zugseile. Die Zugmittel können über Umlenkmittel von der Verzögerungseinheit zu den Zuluftelementen geführt sein. Anstelle von Zugmitteln können auch Druckmittel vorgesehen sein, etwa Druckstangen.

Nach einem weiteren Gedanken der Erfindung beinhaltet das Stellmittel ein Zugmittel, insbesondere ein Zugseil, welches vorzugsweise mit dem Schlitten verbunden ist. Der Schlitten wird demnach ziehend betätigt. Anstelle des Zugmittels kann auch ein Druckmittel vorgesehen sein, etwa eine Druckstange.

Nach einem weiteren Gedanken der Erfindung beinhaltet das Stellmittel einen Antrieb, insbesondere eine manuell oder elektrisch betätigbare Winde, vorzugsweise zum Aufund Abwickeln des Zugmittels.

Nach einem weiteren Gedanken der Erfindung sind durch den Schlitten und die Führung eine Bewegungsrichtung definiert, wobei das Stellmittel den Schlitten in dieser Bewegungsrichtung beaufschlagt, und wobei ein Verbindungsmittel oder beide Verbindungsmittel zum Stellmittel entgegengesetzt mit dem Schlitten bzw. dem Hebelarm verbunden sind. Dies vermindert den konstruktiven Aufwand und eventuelle Reibungsverluste.

Nach einem weiteren Gedanken der Erfindung ist vorgesehen, dass die Zuluftelemente durch Bewegung des Stellmittels öffnen und durch ihr Eigengewicht oder Federkraft schließen, oder dass die Zuluftelemente durch Bewegung des Stellmittels schließen und durch ihr Eigengewicht oder durch Federkraft öffnen.

Nach einem weiteren Gedanken der Erfindung ist vorgesehen, dass der Schlitten durch sein Eigengewicht oder Federkraft das Schließen oder Öffnen der Zuluftelemente fördert. Entsprechend müssen zum Öffnen oder Schließen der Zuluftelemente das Eigengewicht des Schlittens oder eine in diesem Zusammenhang wirksame Federkraft überwunden werden.

Gegenstand der Erfindung ist auch ein Tierstall, insbesondere Geflügelstall mit Zuluftelementen und einer Betätigungsvorrichtung, wie voranstehend angegeben.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
- Fig. 1: Eine schematische Darstellung einer Betätigungsvorrichtung mit zwei Zuluftelementen, von denen eines teilweise geöffnet ist,
- Fig. 1a: ein zweites Zuluftelement im Querschnitt, entsprechend Fig. 1,
- Fig. 1b: ein erstes Zuluftelement im Querschnitt, entsprechend Fig. 1,
- Fig. 2: eine schematische Darstellung entsprechend Fig. 1, jedoch mit beiden Zuluftelementen in geöffneter Stellung,
- Fig. 2a: das zweite Zuluftelement im Querschnitt, entsprechend Fig. 2,
- Fig. 2b: das erste Zuluftelement im Querschnitt, entsprechend Fig. 2.

Ein nicht näher gezeigter Stall für Tiere, insbesondere Geflügel bzw. Hühner ist mit einer erfindungsgemäßen Vorrichtung ausgestattet. In einer Stallwand sind mehrere Zuluftelemente zur Stallbelüftung vorgesehen. In den Figuren gezeigt sind ein erstes Zuluftelement 10 und ein zweites Zuluftelement 11, jeweils mit einem Rahmen 12 und einer im Rahmen beweglich gelagerten Klappe 13, wobei sich letztere über nahezu den kompletten Rahmen erstreckt. Dabei ist die Klappe 13 um eine untere Drehachse 14 zum Öffnen und Schließen schwenkbar. Die Drehachse 14 verläuft nahe einer Unterkante 15 des Rahmens 12 und parallel zu dieser.

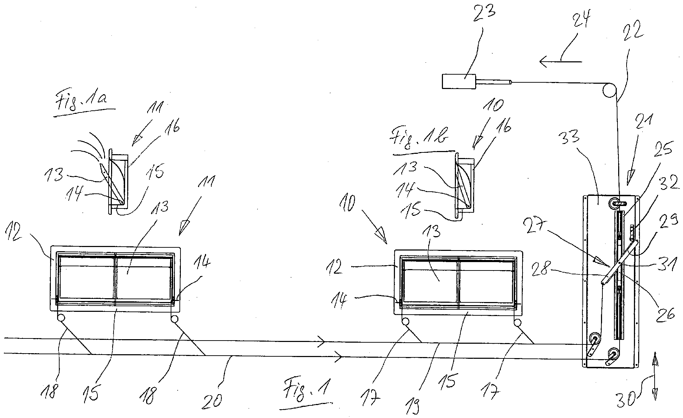

Das erste Zuluftelement 10 ist in Fig. 1 geschlossen, siehe Figur 1b, während das zweite Zuluftelement 11 bereits teilweise geöffnet ist, siehe Stellung der Klappe 13 in Figur 1a. Die Rahmen 12 der Zuluftelemente 10, 11 sind im Bereich ihrer Rückseite 16 mit nicht gezeigten Öffnungen für den Durchtritt von Luft versehen.

Betätigt werden die Klappen 13 durch Klappenzugseile 17, 18, wobei zur Vermeidung von Verwindungen je Klappe zwei Klappenzugseile vorgesehen sind. Die Klappenzugseile 17 sind verbunden mit einem Hauptzugseil 19 und die Klappenzugseile 18 sind verbunden mit einem Hauptzugseil 20. Weitere Klappenzugseile nicht gezeigter Zuluftelemente können mit den Hauptzugseilen 19, 20 verbunden sein, so dass jedes Hauptzugseil 19, 20 mehrere Zuluftelemente bzw. Klappen betätigen kann.

Die Hauptzugseile 19, 20 sind über eine Verzögerungseinheit 21 mit einem gemeinsamen Antriebszugseil 22 verbunden, welches durch eine Winde 23 eingezogen (Pfeil 24) und gelöst werden kann. Winde 23 und Antriebszugseil 22 bilden ein Stellmittel zur Betätigung der Verzögerungseinheit. Die Zugseile 17 bis 20 wirken als Verbindungsmittel zwischen der Verzögerungseinheit 21 und den Zuluftelementen 10,11.

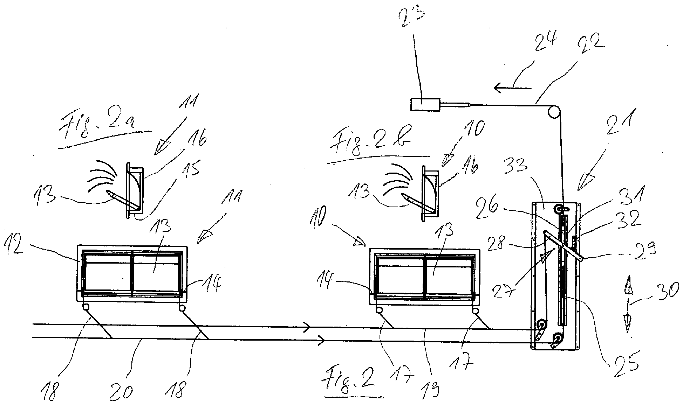

Die Verzögerungseinheit 21 weist einen in einer Führung 25 beweglichen Schlitten 26 auf. Mit dem Schlitten 26 gelenkig verbunden ist ein zweiarmiger Hebel 27 mit Hebelarmen 28, 29. Während der Schlitten 26 geradlinig in einer Richtung (Doppelpfeil) bewegbar ist, erstreckt sich der Hebel 27 quer oder schräg dazu. Wird der Doppelpfeil 30 als Nord-Süd-Richtung definiert, ist der Hebel 27 in Fig. 1 etwa in Nordost-Südwest-Richtung ausgerichtet und in Fig. 2 etwa in Nordwest-Südost-Richtung. Entsprechend liegen die Hebelarme 28, 29 vorzugsweise auf einer gemeinsamen Achse und sind nicht relativ zueinander abgewinkelt. Auch sind die Hebelarme 28, 29 etwa gleich lang und gehen im Bereich eines Drehpunkts 31 ineinander über.

Die Verzögerungseinheit 21 weist außerdem einen Anschlag 32 für den Hebelarm 29 auf. Der Anschlag 32 ist mit Abstand zur Führung 25 und zusammen mit dieser auf einem gemeinsamen Träger 33 befestigt.

Ein oberes Ende des Schlittens 26 ist mit dem Antriebszugseil 22 gekoppelt, ein unteres Ende (des Schlittens 26) mit dem Hauptzugseil 20 für das zweite Zuluftelement 11. Ein freies Ende des Hebelarms 28 ist mit dem Hauptzugseil 19 für das erste Zuluftelement 10 gekoppelt.

In einer nicht gezeigten Ausgangsstellung mit geschlossenen Zuluftelementen 10, 11 befindet sich der Schlitten 26 in einer unteren Position innerhalb der Führung 25. Dabei ist das Hauptzugseil 20 gespannt, während das Hauptzugseil 19 leicht durchhängt.

Zum Öffnen der Zuluftelemente 10, 11 wird der Schlitten 26 durch das Antriebszugseil 22 in die Position gemäß Fig. 1 bewegt. Die Hauptzugseile 19, 20 sind beide straff. Das Zuluftelement 11 ist leicht geöffnet (aber noch nicht vollständig). Das erste Zuluftelement 10 ist noch geschlossen. Der Hebelarm 29 liegt am Anschlag 25 an.

Bei weitere Bewegung des Antriebszugseils 22 mit dem Schlitten 26 wird das Hauptzugseil 20 genau wie bisher weiterbewegt und die Klappe 13 des zweiten Zuluftelements 11 gelangt in die Öffnungsstellung gemäß Fig. 2a (vollständige Öffnung). Da der Hebelarm 29 am Anschlag 32 anliegt, dreht automatisch der Hebel 27 um seinen Drehpunkt 31, so dass sich das freie Ende des Hebelarms 28 mit dem Hauptzugseil 19 schneller bewegt, als der Schlitten 26 mit dem Hauptzugseil 20. Entsprechend öffnet jetzt die Klappe 13 des ersten Zuluftelements 10 schneller als die Klappe 13 des zweiten Zuluftelements 11 und holt diese sogar ein, siehe Fig. 2a und 2b. Im Ergebnis stellt sich die Position entsprechend der Fig. 2, 2a, 2b ein.

Die Zugseile 19 bis 20, 22 können je nach Anordnung und Verteilung der verschiedenen Vorrichtungsteile über Umlenkrollen geführt sein, die beispielhaft in den Figuren eingezeichnet, aber nicht näher beziffert sind.

Im dargestellten Ausführungsbeispiel werden die Klappen 13 durch nicht gezeigte Federelemente in ihrer geschlossenen Stellung gehalten. Entsprechend müssen die Winde 23 und die Zugseile 17 bis 20, 22 die Federkräfte mit überwinden. Durch Lösen der Winde 23 und der Zugseile bewirken die Federkräfte ein Schließen der Klappen 13.

Bei entsprechend anderer Aufhängung der Klappen 13 können diese auch durch ihr Eigengewicht in geschlossener Position gehalten werden. Ebenfalls möglich ist eine Umkehrung der Kinematik. Die Klappen 13 würden dann durch Federkraft oder durch ihr Eigengewicht öffnen und durch die Zugseile zum Schließen betätigt werden. Wichtig ist auch dabei die Verzögerungseinheit 21 zur Erzielung einer verzögerten aber am Ende des Vorgangs beschleunigten Bewegung einer der beiden Klappen.

### Bezugszeichenliste:

- 10: erstes Zuluftelement
- 11: zweites Zuluftelement
- 12: Rahmen
- 13: Klappe
- 14: Drehachse
- 15: Unterkante
- 16: Rückseite
- 17: Klappenzugseile
- 18: Klappenzugseile
- 19: Hauptzugseil
- 20: Hauptzugseil
- 21: Verzögerungseinheit
- 22: Antriebszugseil
- 23: Winde
- 24: Pfeil
- 25: Führung
- 26: Schlitten
- 27: Hebel
- 28: Hebelarm
- 29: Hebelarm
- 30: Doppelpfeil
- 31: Drehpunkt
- 32: Anschlag
- 33: Träger

## Patentansprüche

1. Betätigungsvorrichtung für zwei oder mehr Zuluftelemente (10, 11), mit einem Stellmittel zur Betätigung einer Verzögerungseinheit (21), einem ersten Verbindungsmittel von der Verzögerungseinheit (21) zu wenigstens einem ersten Zuluftelement (10), und einem zweiten Verbindungsmittel von der Verzögerungseinheit (21) zu wenigstens einem zweiten Zuluftelement (11), wobei die Verzögerungseinheit (21) die Bewegung des Stellmittels auf die beiden Verbindungsmittel überträgt und dabei eines der beiden Verbindungsmittel im Verhältnis zum anderen Verbindungsmittel verzögert.

2. Betätigungsvorrichtung nach Anspruch 1, **dadurch gekennzeichnet, dass** die Verzögerungseinheit (21) einen Schlitten (26) aufweist, welcher einen zweiarmigen Hebel (27) trägt, dass neben einer Führung (25) für den Schlitten (26) ein Anschlag (32) für einen ersten Hebelarm (29) des Hebels (27) vorgesehen ist, dass eines der beiden Verbindungsmittel mit dem Schlitten (26) gekoppelt ist, dass das andere Verbindungsmittel mit einem zweiten Hebelarm (28) des Hebels (27) gekoppelt ist, und dass der Schlitten (26) durch das Stellmittel betätigbar ist.

3. Betätigungsvorrichtung nach Anspruch 2, **dadurch gekennzeichnet, dass** die beiden Hebelarme (28, 29) etwa gleichlang sind und/oder sich entlang einer gemeinsamen Geraden erstrecken.

4. Betätigungsvorrichtung nach Anspruch 2 oder 3, **dadurch gekennzeichnet, dass** bei einer Betätigungsbewegung des Stellmittels zunächst der erste Hebelarm (29) am Anschlag (32) zur Anlage kommt und dass dadurch bei weiterer Betätigungsbewegung des Stellmittels das mit dem zweiten Hebelarm (28) gekoppelte Verbindungsmittel schneller bewegt wird als das mit dem Schlitten (26) gekoppelte Verbindungsmittel.

5. Betätigungsvorrichtung nach Anspruch 1 oder einem der weiteren Ansprüche, **dadurch gekennzeichnet, dass** die Verbindungsmittel Zugmittel sind, insbesondere Zugseile (17, 19 und 18, 20).

6. Betätigungsvorrichtung nach Anspruch 1 oder einem der weiteren Ansprüche, **dadurch gekennzeichnet, dass** das Stellmittel ein Zugmittel, insbesondere ein Zugseil (22) beinhaltet, welches vorzugsweise mit dem Schlitten (26) verbunden ist.

7. Betätigungsvorrichtung nach Anspruch 1 oder einem der weiteren Ansprüche, **dadurch gekennzeichnet, dass** das Stellmittel einen Antrieb beinhaltet, insbesondere eine manuell oder elektrisch betätigbare Winde (23).

8. Betätigungsvorrichtung nach Anspruch 2 oder einem der weiteren Ansprüche, **dadurch gekennzeichnet, dass** durch den Schlitten (26) und die Führung (25) eine Bewegungsrichtung (Pfeil 30) definiert sind, dass das Stellmittel den Schlitten (26) in dieser Bewegungsrichtung beaufschlagt, und dass ein Verbindungsmittel oder beide Verbindungsmittel zum Stellmittel entgegengesetzt mit dem Schlitten (26) bzw. dem Hebelarm (28) verbunden sind.

9. Betätigungsvorrichtung nach Anspruch 1 oder einem der weiteren Ansprüche, **dadurch gekennzeichnet, dass** die Zuluftelemente (10, 11) durch Bewegung des Stellmittels öffnen und durch ihr Eigengewicht oder Federkraft schließen, oder dass die Zuluftelemente (10, 11) durch Bewegung des Stellmittels schließen und durch ihr Eigengewicht oder durch Federkraft öffnen.

10. Betätigungsvorrichtung nach Anspruch 2 oder einem der weiteren Ansprüche, **dadurch gekennzeichnet, dass** der Schlitten (26) durch sein Eigengewicht oder durch Federkraft das Schließen oder Öffnen der Zuluftelemente (10, 11) unterstützt.

11. Tierstall, insbesondere Geflügelstall, mit Zuluftelementen und einer Betätigungsvorrichtung nach einem der voranstehenden Ansprüche.
